# EUROPEAN PATENT APPLICATION

(11) **EP 0 940 084 A1**
(43) Date of publication of application: **08.09.1999**
(21) Application number: 98104041.3
(22) Date of filing: 06.03.1998
(51) Int. Cl.: A23G 1/00, A23G 3/00

(54) **A composite food product and process for manufacturing same**

(71) Applicant: SOREMARTEC S.A., 6700 Arlon-Schoppach (BE); Ferrero S.p.A., I-12051 Alba (Cuneo) (IT); FERRERO OFFENE HANDELSGESELLSCHAFT m.b.H., D-60599 Frankfurt (DE)
(72) Inventor: Damonte, Tomaso, I-12051 Alba (Cuneo) (IT)
(74) Representative: Bosotti, Luciano

(57) **Abstract**

A composite food product which includes, in a single edible assembly:
- a first part (2) with respective first flavour-bearing agents (2, 4), the said first part being immediately broken down once in the mouth to release the said first flavour-bearing agents, and
- a second part (3) joined to the said first part (2) and including flavour-bearing agents (3) which are released over a considerable period after being placed in the mouth.

## Description

The present invention relates to composite food products.

The invention was developed with particular, though not exclusive, attention to products for freshening the breath.

These products are generally manufactured as pastilles or sweets constituted by a body of flavoured confectionery (peppermint flavoured, for example) possibly coated with sugar, generally also flavoured.

The possible variants of this product are practically infinite. In fact they vary from sweets of lenticular shape to pellets, tablets, lozenges or tiny discs or balls etc ... to products with more complex shapes, such as ring shaped sweets for example.

Current experience shows that in order to make the taste of the product linger for some time once it is eaten, and thus lengthen the breath-freshening effect thereof, it is necessary to give the product itself a particular consistency. In this way, the flavour-bearing agents are released more slowly, as the product is "sucked", that is, as the mass of the product is consumed, attacked and softened by saliva.

This arrangement, however, means that the organoleptic effect of the product is not immediate: in practice it is necessary to wait some time until the product generates the desired freshening action and releases its taste. The consumer tends to hasten this effect by chewing the product. This, however, can have undesirable consequences. A hard product can, for instance, prove remarkably hard to bite, which can be unpleasant or even damaging for consumers with sensitive teeth. In addition, chewing the product, and thus fragmenting it, enhances the action of the saliva: as a result the product is consumed more quickly and the freshening effect is less long-lasting than it would have been had the product been only sucked.

The object of the present invention is to provide a product of the type specified above that, on the one hand, enables the freshening effect to develop rapidly as soon as the product is put in the consumer's mouth, and on the other, ensures that this effect is long-lasting. It should also be explained that although these aims are here identified as referring specifically to products for freshening the breath, they could apply equally to food products of a different nature, not necessarily confectionery: one could imagine, for example, savoury flavoured snack products and the like.

This object is achieved according to the invention by providing a composite food product having the characteristics specified in the Claims which follow. The invention also covers an associated method of production.

The invention will now be described, purely by way of non-limitative example, with reference to the appended drawings, in which:
- Figure 1 illustrates a possible embodiment of a food product according to the invention, and
- Figure 2 shows a section taken on the line II-II of Figure 1.

In the drawings, a food product generally indicated 1 is constituted by a confectionery item substantially identifiable as a pastille or sweet with a breath-freshening effect (sometimes known as a breath freshener).

With regard to the currently preferred embodiment illustrated, the product 1 is essentially composed of:
- a core, defined in the embodiment illustrated by way of example by two pellet-shape pills or sweets 2a, 2b identical or substantially identical to each other, and
- an annular body 3, usually constituted by a pastille or tablet which partly surrounds the sweets 2 so as to give the product 1 as a whole an appearance which can be defined as being "like the planet Saturn".

The assembled parts described above constitute a "single edible assembly", being an item intended to be eaten in one go, in the way one would eat a pill or pastille. The product is characterised in that the first part (the sweets 2) carries first taste-giving agents and is immediately pleasant once put in the mouth as these taste-giving agents (described in detail later) are released. The second part (the body 3) includes second taste-giving agents which are released over a period of time once put in the mouth.

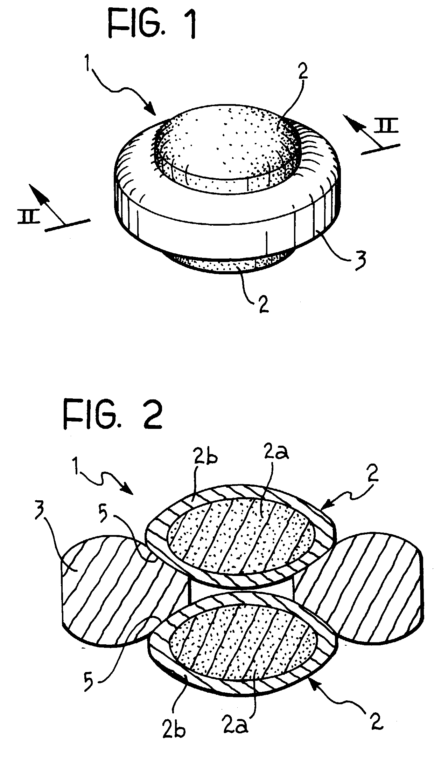

As can be better appreciated from the sectioned view of Figure 2, each sweet 2 is essentially composed of:
- a relatively soft core 2a having a consistency ranging from that of a more or less viscous liquid to that of a fairly compact solid body, and
- a shell 2b which encloses the core 2a and is sufficiently hard to provide the sweet 2 with the mechanical strength to prevent it being deformed or crushed before being eaten.

A sweet (or pill) 2 having the characteristics described above can be manufactured, for example, by first making the core 2a (using known methods) as a tablet of powder material. When the core 2a is removed from the mould it is ready for a coating process which will form the shell 2b. The shell 2b is preferably made of a polysaccharide such as saccharose.

The core 2a of the sweet 2 is preferably made from a flavoured confectionery product which includes as sweeteners one or more crystalline sugar alcohol and possibly other sweeteners. The flavouring agent is preferably incorporated into the sugar alcohol used in the confectionery product, the flavouring being incorporated into the sugar alcohols in a process which includes the steps of:
a) heating the said sugar alcohol to a temperature higher than its melting point until it melts,
b) cooling the melt until it is below its melting point and is in a metastable vitreous state,
c) adding the crystalline sugar alcohol to the molten vitreous mass, and mixing therewith, in a quantity ranging from 5 to 120% by weight of the melt, and the flavouring agent in a quantity suitable to confer the flavour to the total mass, and
d) removing heat while agitating the total mass until it crystallizes.

This process enables a flavoured sugar alcohol to be prepared in a solid crystalline form, by incorporating the flavouring agent during the steps described above.

The sugar alcohol incorporating a flavouring agent obtained by the above operations can then be used as sweetener in the core 2a of the sweet 2.

The sugar alcohols that can be used within the scope of the invention are preferably hexitols and pentitols and their derivatives, in particular xylitol, sorbitol, lattitol, mannitol, maltitol, isomaltitol, α-D-glucopiranosyl-1,6-mannitol, α-D-glucopiranosyl-1,6-sorbitol and mixtures thereof.

The definition of sugar alcohols and their derivatives should be understood to include commercial brands such as PALATINIT® and ISOMALT®. The preferred sugar alcohol used within the scope of the invention to incorporate the flavour is xylitol.

The flavouring agents include, but are not restricted to: peppermint, spearmint, cinnamon, lemon, orange, lime, grapefruit, strawberry, cherry and pineapple in the form of essences, and compounds such as wintergreen (methylsalicylate). The chemical nature of the flavouring agent did not prove critical in the incorporating process of the invention.

Tests carried out by the Applicant showed that by using the aforesaid preferred flavours it is possible to achieve a significant improvement in flavour development. This improvement relates in particular to an organoleptic sensation which augments the flavour, noticeable by the consumer when the confectionery product (that is, the or each sweet 2) comes into contact with saliva when eaten.

This flavour-enhancing effect is particularly noticeable when the flavour used has aromatic components which impart a sensation of freshness; therefore mint flavours are clearly preferred. The process of incorporating the flavouring agent into the sugar alcohol is preferably carried out in an autoclave in an inert gas which is slightly pressurised; over-pressure ranging from 0.5 to 2 bar in an atmosphere of inert gas proves advantageous, with the preferred gases being nitrogen, argon and carbon dioxide. Use of an inert gas over-pressure is advantageous as it limits any loss of flavour. However, the process can be carried out at atmospheric pressure in air.

The guantity of flavouring agent added to the molten product in its vitreous state during step c) can vary within a wide range in accordance with the flavouring power of the flavours used. As a general rule, quantities ranging from 0.5 to 10% by weight of flavouring agent in relation to the vitreous mass are used, and preferably quantities from 1.5 to 2% by weight.

The process of incorporating the flavouring into the sugar alcohol produces a flavoured, crystalline sugar alcohol, in which the flavouring agent is presumably co-crystallised within the crystal lattice of the said sugar alcohol. In the context of the product of the invention, the organoleptic effect achieved in the sweets 2 could be compared to the effect theoretically achievable by making the core 2a not from a solid, though soft, product, but from a liquid product, such as a syrup.

To this end, the flavoured sugar alcohol content used in the cores 2a of the sweets 2 is preferably between 0.5 and 20% by weight, and preferably from 1 to 5 % in weight relative to the overall weight.

Naturally, the sweets 2 may contain other, conventional sugars, such as saccharose, glucose or even synthetic sweeteners. The flavours incorporated may have been introduced completely or in part by means of the sugar alcohol component, as described earlier. During preparation, the flavoured sugar alcohol component or sugar alcohol mixture is preferably introduced as the last ingredient during the final stage of production of the finished product or any intermediate products so as to avoid, as far as possible, this component coming into contact with moisture, or being exposed to high temperatures which could alter the physical structure of the product itself.

In a typical example of preparation of the cores 2a of the sweets 2, 50 kilograms of crystalline xylitol powder are put into a 200 litre autoclave with a heat-exchange jacket and a scraper-blade mixer. The autoclave is filled with nitrogen pressurised at 1.5 bar.

Heating to a temperature of 110°C is achieved by means of the heating jacket, until the xylitol is molten, and then keeping the molten mass slowly agitated. The mass is then cooled to a temperature of 80-82°C until it reaches a metastable vitreous state. 50 Kg of peppermint-flavoured crystalline xylitol are then added while the mass is slowly stirred, the flavour accounting for 1 to 5% of the weight of the molten mass (2% by weight in this case).

While continuing the slow agitation, the xylitol is cooled by diffusion of its heat with the molten mass until the mass crystallises. The product is discharged from the autoclave at an ambient temperature of 25°C.

The product thus obtained is used as a sweetening ingredient for the cores 2a of the sweets 2, the ingredients of which are generally included in the following percentages:

| Ingredients | % |
|---|---|
| saccharose | 80-95 |
| maltodextrin | 2-10 |
| polyalcohols (xylitol, mannitol, lactitol, maltitol) | 2-6 |
| gum arabic | 1-5 |
| rice starch | 0.5-5 |
| organic acids (tartaric, citric, malic) | 0.2-4 |
| waxes (carnauba, bees', candelilla) | 0.001-0.1 |
| natural and artificial flavours | 0.05-3 |

In the manufacture of the sweets 2, a granular compound is first formed by mixing together the saccharose, the maltodextrin, the gum arabic and the polyalcohols, into which have been incorporated flavours as described above.

The granular compound is then formed into the desired shape with appropriate presses to obtain the sweets 23. These are then covered in a polysaccharide and starch solution in coating devices, where the rotating cores are sprayed with small quantities of sugar solution to which additional quantities of flavouring may be added in known manner. The finished sweets 2 are thus obtained, ready to be coupled with the annular elements 3.

In the embodiment illustrated, the body 3 is constituted by an annular shaped pastille or tablet (naturally, the shape could be different: a disc, a star or the like) constituted by a compact mass of sugar or similar edible substance. The substance is usually flavoured the same as, similar to or to complement the taste of the sweets 2. Bodies such as the body 3 are commonly manufactured in annular shape, even in the context of breath-freshening pastilles, by means of known moulding processes.

In order to create an assembly which will hold together, the sweets 2 are secured to the annular body 3.

They may be attached, for example, by means of an edible adhesive such as a mixture of sugar and gum arabic. This adhesive is initially not very viscous, meaning that it can be applied by being poured into the axial cavity of the body 3 placed over one of the sweets 2, with the result that the adhesive (also) penetrates the gap between the facing peripheral portions of the body 3 and of the sweets 2. The quantity of adhesive poured in is measured so that it reaches a level within the axial cavity of the body 3 closed at the bottom by the said drop, so as also to come into contact with the other sweet 2 subsequently placed on top of the previously formed assembly. In this way the adhesive also contacts the facing peripheral portions of the body 3 and of the other sweet 2.

The rapid hardening of the adhesive ensures the desired connection between the sweets 2 and the body 3. The said connection can be facilitated and/or made more secure by giving the facing peripheral portions of the annular body 3 and the sweets 2 complementary shapes which facilitate their connection. In the example illustrated, the sweets 2 are of lenticular shape and the annular body 3 is (when seen in cross section) generally pear shaped, with radial internal tapering defined by concave toroidal surfaces (see in particular the cross section of Figure 2). The body 3 can easily be given such a shape during moulding.

It is clear from the above that both with regard to the aesthetic aspect and to organoleptic properties, the sweets 2 and the body 3 may be made more similar or may be made more different in accordance with specific manufacturing and taste requirements. In particular, the above two elements of the product 1 can be made with identical or very similar colours and/or flavours (for example, both mint flavoured and/or white). Alternatively, they can be made in contrasting colours (for example with the sweets 2 green, blue, red and the like and the body 3 white, or the reverse). The tastes, imparted by the respective flavourings can also be made different, in accordance with the final organoleptic effect which is desired.

When a consumer puts the product 1 in his mouth, his saliva generally acts first on the sweets 2 (this without having to chew) rapidly breaking and/or consuming at least a portion of the shell 2b and gaining access to and/or causing the release of the core 2a which is generally softer. The flavour is thus rapidly diffused around the mouth cavity, leading to the desired initial sensation of freshness, that is, the release of the flavour-bearing agents. Meanwhile, the typical action involved in sucking a compact pastille begins to affect the annular body 3. As a result, even when the sweets 2, and especially the cores 2a, are virtually totally consumed, the body 3 is developing the effect of the flavour-bearing agents and will continue to develop it for a considerable period of time from when the product 1 was placed in the consumer's mouth.

The joining of the sweets 2 and the annular body 3 (preferably using an edible adhesive which is easily attacked by saliva such as sugar, gum arabic and/or a mixture of these) can be carried out in such a way that the sweets 2 separate almost immediately from the body 3, once the product 1 is placed in the mouth of a consumer. The overall effect achieved gives greater satisfaction to the consumer (who, in effect, "feels" three products), thereby encouraging more controlled consumption of the product. Other arrangements are also available to join the sweets 2 to the body 3 such as heat welding, ultrasonic welding or even form coupling (for example with interference) achieved by taking advantage of relative dimensions and/or shape in order to fix the sweets 2 into or around the body 3.

The principle of the invention remaining unchanged, manufacturing details and embodiments may naturally be widely varied from those described and illustrated, without thereby departing from the scope of the invention. This applies particularly, for example, to:
- the shape of the core defined by the sweets 2 (first part of the product) and/or of the body 3 (second part of the product): for example, the two sweets 2 could form a single unit extending through the axial hole of the body 3; or, while retaining the configuration and relative arrangement illustrated in the appended drawings, there could be a single sweet 2, arranged on one surface of the body 3; instead of an annular or toroidal body, this latter could be a star or a stick bearing a sweet 2 at one or either end;
- the relative arrangement of the elements, for example, instead of projecting more or less symmetrically on either side of the body 3, the sweet or sweets 2 could project substantially or completely on one side, giving the overall product 1 a sombrero shape, and/or
- the intrinsic characteristics of the sweet or sweets 2: for example, instead of comprising a core 2a and a shell 2b, each sweet could be constituted by a more or less uniform mass (that is, a pastille or tablet) which would be more soluble and more easily consumed than the body 3; similarly, the body 3 could be formed, at least in part, according to the criteria described earlier with respect to the manufacture of the sweets 2.

## Claims

1. A composite food product which includes in a single edible assembly:
- a first part (2) with respective first flavour-bearing agents, the said first part releasing the said first flavour-bearing agents immediately as it is placed in the mouth, and
- a second part (3) connected to the said first part (2) and comprising second flavour-bearing agents (3) which are released over a period of time once placed in the mouth.

2. A composite food product according to Claim 1, characterised in that the said first part is constituted by at least one sweet (2) which includes a shell (2b) enveloping a generally soft core (2a).

3. A composite food product according to Claim 2, characterised in that the said first flavour-bearing agents are contained in the said core (2a).

4. A composite food product according to Claim 2 or Claim 3, characterised in that the said first flavour-bearing agents are contained in the said shell (2b).

5. A composite food product according to any Claim from 2 to 4, characterised in that the said shell (2b) is constituted by a polysaccharide.

6. A composite food product according to Claim 5, characterised in that the said polysaccharide is saccharose.

7. A composite food product according to any Claim from 1 to 6, characterised in that the said second part (3) is constituted by a compact edible mass.

8. A composite food product according either to Claim 1 or Claim 7, characterised in that the said second part is sugar based.

9. A composite food product according to any Claim from 1 to 8, characterised in that the said first part (2) constitutes a core of the product, surrounded at least partially by the second part (3) of the product itself.

10. A composite food product according to Claim 7, characterised in that the said first part comprises two sweets (2), one applied to each opposite side of the said second part (3) of the product.

11. A composite food product according to Clam 9 or Claim 10, characterised in that the configuration of the said second part (3) is generally annular.

12. A composite food product according to Claim 10 and Claim 11, characterised in that the said two sweets (2) are substantially lenticular in shape and in that the said generally annular second part has a central orifice with concave surfaces (5) on opposite sides operable to achieve the correct engagement with the said sweets (2).

13. A composite food product according to Claim 11 or Claim 12, characterised in that the said second part (3) is substantially pear-shaped in cross section.

14. A composite food product according to Claim 11, characterised in that the said first part (2) projects by a substantially identical measure on either side of the annular shaped second part (3).

15. A process for the manufacture of a food product according to Claim 1, characterised in that it includes the step of manufacturing at least the said first part (2) as a flavoured product which includes, as sweetener, one or more crystalline sugar alcohol and possibly other sweeteners in which the flavouring agent is previously incorporated into the sugar alcohol ingredient used in the confectionery product, the flavouring agent being incorporated into the sugar alcohol by means of a process which includes the steps of:
a) heating the said sugar alcohol to a temperature above its melting temperature until it melts,
b) cooling the melted mass to below its melting temperature until it reaches a metastable vitreous state,
c) adding the sugar alcohol in crystalline form to the melted mass in its vitreous state, during conditions of agitation, in a quantity ranging from 5 to 120% by weight of the melt, and the flavouring agent in a quantity suitable to confer the flavour to the total mass, and
d) extracting heat, under optimum conditions of agitation, until the mass crystallises.

16. A process according to Claim 15, characterised in that the said sugar alcohol is selected from a group comprising of xylitol, sorbitol, lattitol, mannitol, isomaltitol and glucopyranosil derivatives of mannitol and sorbitol.

17. A process according to Claims 15 and 16, in which the flavour is incorporated into the crystalline sugar in inert gas under pressure ranging from 0.5 to 2 bar.

18. A process according to any Claim from 15 to 17, characterised in that the flavouring agent is an essence or compound selected from the group which consisting of spearmint, peppermint, cinnamon, lemon, orange, lime, grapefruit, cherry, strawberry, pineapple and methylsalicylate (wintergreen).

19. A process according to any Claim from 15 to 18 in which the flavouring agent is added during step c) in a quantity ranging from 0.5 to 10% by weight, of the weight of the molten mass.

20. A process according to any Claim from 15 to 19, characterised in that the said first part (2) is manufactured as a coated sweet.

21. A process according to Claim 20, characterised in that the said drop (5) is subject to a coating process with a polysaccharide.

22. A process according to Claim 21, characterised in that the said polysaccharide is saccharose.

23. A process according to any Claim from 15 to 22, characterised in that it includes the steps of:
- manufacturing the said first part (2),
- manufacturing the said second part (3), and
- joining the said first part to the said second part (3) by means of an operation selected from the group comprising: application of an edible adhesive, heat welding, ultrasonic welding, form engagement.

24. A process according to Claim 23, characterised in that the said first part (2) is joined to the said second part (3) by application of an edible adhesive selected from the group comprising: sugars, gum arabic and a mixture thereof.
